# FASCICULE DE BREVET EUROPEEN

(11) **EP 3 492 301 B1**
(45) Date de publication et mention de la délivrance du brevet: **30.08.2023**
(21) Numéro de dépôt: 18205990.7
(22) Date de dépôt: 13.11.2018
(51) Int. Cl.: B60L 3/00, H01R 13/703, H01R 12/57

(54) **DISPOSITIF ÉLECTRIQUE POUR VÉHICULE ÉLECTRIQUE OU HYBRIDE**
ELEKTRISCHE VORRICHTUNG FÜR EIN ELEKTRO- ODER HYBRIDFAHRZEUG
ELECTRICAL DEVICE FOR AN ELECTRIC OR HYBRID VEHICLE

(30) Priorité: 30.11.2017 FR 1761402
(43) Date de publication de la demande: 05.06.2019
(73) Titulaire: Valeo eAutomotive France SAS, 95800 Cergy (FR)
(72) Inventeur: LAMARCHE, Anthony, 78450 VILLEPREUX (FR); PARIGOT, Baptiste, 92500 RUEIL MALMAISON (FR); GILET, Olivier, 95270 VIARMES (FR)
(74) Mandataire: Valeo Powertrain Systems

(56) Documents cités:
- EP-A1- 2 062 786
- EP-A1- 2 086 063
- JP-A- 2006 327 251
- JP-A- 2009 060 746
- US-A1- 2011 261 498
- US-A1- 2014 170 878
- US-A1- 2016 200 270
- US-B1- 6 196 858

## Description

### DOMAINE TECHNIQUE ET OBJET DE L'INVENTION

La présente invention se rapporte au domaine de l'électricité de puissance et concerne plus particulièrement un dispositif électrique de puissance, notamment pour véhicule électrique ou hybride.

L'invention vise notamment à permettre de déconnecter aisément le circuit électrique haute tension du dispositif lors de l'ouverture de sa trappe de maintenance afin d'éviter à un opérateur de subir un choc électrique.

### ETAT DE LA TECHNIQUE

Comme cela est connu, un véhicule automobile électrique ou hybride comprend un système de motorisation électrique, alimenté par une batterie d'alimentation haute tension via un réseau électrique embarqué haute tension, et une pluralité d'équipements électriques auxiliaires, alimentés par une batterie d'alimentation basse tension via un réseau électrique embarqué basse tension.

La batterie d'alimentation haute tension assure une fonction d'alimentation en énergie du système de motorisation électrique permettant la propulsion du véhicule. Plus précisément, afin de commander la machine électrique entrainant les roues du véhicule, il est connu d'utiliser un onduleur permettant de convertir le courant continu fourni par la batterie d'alimentation haute tension en une pluralité de courants de commande alternatifs.

Dans une solution connue, l'onduleur se présente sous la forme d'un boitier dans lequel sont montés un module électronique de puissance et une unité électronique de contrôle. Le module électronique de puissance comprend des composants électroniques de puissance par lesquels passe l'énergie alimentant la machine électrique. Plus précisément, le module électronique de puissance permet de commander la machine électrique en utilisant des courants dits « de phase » de forte intensité et déphasés entre eux deux à deux, par exemple de 120°, ces courants de phase étant générés par le module électronique de puissance à partir du courant continu délivré par la batterie haute tension.

L'unité électronique de contrôle commande le module électronique de puissance afin qu'il réalise la conversion du courant continu reçu de la batterie haute tension en une pluralité de courants de phase alternatifs de commande de la machine électrique. A cette fin, l'unité électronique de contrôle se présente sous la forme d'une carte électronique sur laquelle sont montés des composants électroniques reliés par des pistes électriques et permettant de contrôler le module électronique de puissance afin qu'il délivre les courants de commande à la machine électrique.

Lors de la maintenance de l'onduleur, il peut être nécessaire pour un opérateur d'ouvrir une trappe montée sur le boitier de l'onduleur afin d'accéder au module électronique de puissance ou à l'unité électronique de contrôle. Pour ce faire, il est nécessaire de déconnecter l'onduleur, c'est-à-dire d'interrompre la circulation des courants de haute intensité circulant dans l'onduleur dont les composants électroniques travaillent à haute tension, afin d'éviter que l'opérateur ne subisse un choc électrique qui pourrait le blesser, voire le tuer. Il peut être également nécessaire de décharger des capacités de l'onduleur afin de protéger l'opérateur.

A cette fin, il est connu de monter dans l'onduleur un mécanisme de sécurité dit « de verrouillage » (connu sous le nom « d'interlock » en langue anglaise) afin de connecter et déconnecter le module électronique de puissance selon que la trappe est respectivement fermée ou ouverte. Un tel mécanisme se présente sous la forme d'un interrupteur comprenant un bouton poussoir monté contre la paroi interne de la trappe et dont l'état ouvert ou fermé correspond respectivement à l'état ouvert ou fermé de la trappe. Un tel mécanisme peut s'avérer coûteux et complexe car il nécessite de monter plusieurs pièces ensemble. De plus, ce type de mécanisme nécessite un espace de montage qui peut s'avérer important, ce qui est d'autant plus problématique que l'espace intérieur d'un onduleur est particulièrement restreint, notamment derrière la trappe où il est nécessaire à un opérateur d'avoir suffisamment d'espace pour effectuer la maintenance du module électronique de puissance ou de l'unité électronique de contrôle. US 2014/170878 A1 divulgue un dispositif électrique de puissance, comprenant un boîtier à l'intérieur duquel est monté un composant électronique de puissance et une unité électronique de contrôle comprenant une carte électronique permettant le contrôle dudit composant électronique de puissance, ledit boîtier comprenant une trappe et une pluralité de parois dont au moins l'une desdites parois délimite une ouverture obturée par la trappe, ladite trappe comprenant un connecteur électrique traversant ladite trappe, ledit connecteur électrique comprenant une pluralité de broches de connexion électrique.

Il existe donc le besoin d'un mécanisme de sécurité qui soit à la fois simple, fiable et compact afin de déconnecter les composants électroniques de puissance d'un onduleur lorsqu'un opérateur en ouvre la trappe de maintenance.

### PRESENTATION GENERALE DE L'INVENTION

A cet effet, l'invention a tout d'abord pour objet un dispositif électrique de puissance, notamment pour véhicule électrique ou hybride, ledit dispositif comprenant un boitier à l'intérieur duquel est monté au moins un composant électronique de puissance et une unité électronique de contrôle, ladite unité électronique de contrôle comprenant une carte électronique permettant le contrôle dudit composant électronique de puissance, ledit boitier comprenant une pluralité de parois dont au moins l'une desdites parois délimite une ouverture obturée par une trappe, ladite trappe comprenant un connecteur électrique traversant ladite trappe, ledit connecteur électrique comprenant une pluralité de broches de connexion électrique. Ledit dispositif est remarquable en ce que l'une des broches de connexion, dite « broche de contact », constitue une portion conductrice de la carte électronique dont la déconnexion, par retrait de la trappe, provoque l'arrêt du dispositif ou la décharge de capacités du dispositif.

Les composants électroniques de puissance peuvent être arrangés dans un ou des modules électroniques de puissance.

Le dispositif selon l'invention permet ainsi avantageusement d'intégrer la fonction de connexion et de déconnexion des composants électroniques de puissance dans le connecteur électrique de la trappe, ce qui évite d'ajouter un mécanisme spécifique pour remplir ladite fonction et permet donc de simplifier l'architecture du dispositif et de réduire son coût sans nécessiter d'espace supplémentaire.

Notamment, lesdites parois sont des parois périphériques du dispositif électrique, notamment séparant un espace interne du dispositif électrique avec l'extérieur.

De préférence, le dispositif électrique est un onduleur configuré pour convertir un courant continu, par exemple fourni par une batterie d'alimentation haute tension, en un ou plusieurs courants alternatifs, par exemple de commande des phases d'une machine électrique.

Selon un aspect de l'invention, chaque broche de connexion du connecteur électrique comprend au moins une extrémité libre dite « de connexion ». En particulier, l'extrémité libre est destinée à se connecter avec une borne de la carte électronique, par exemple dans un contact de type « mâle-femelle ».

De préférence, la broche de contact comprend deux extrémités de connexion afin de constituer une portion conductrice de la carte électronique dont la déconnexion, par retrait de la trappe, provoque l'arrêt du dispositif électrique ou la décharge de capacités du dispositif électrique de puissance.

Dans une forme de réalisation préférée, la broche de contact présente au moins en partie une forme de U pour simplifier la fabrication du connecteur.

Avantageusement, le connecteur électrique comprenant un corps réalisé en un matériau électriquement isolant, notamment un matériau plastique surmoulé, chaque broche de connexion du connecteur électrique comprend une extrémité de liaison noyée dans ledit corps du connecteur électrique.

Selon un aspect de l'invention, la carte électronique comprend un organe de connexion permettant de recevoir les extrémités de connexion des broches de connexion du connecteur électrique afin de détecter le retrait du connecteur et provoquer l'arrêt du dispositif électrique de puissance ou la décharge de capacités du dispositif électrique de puissance.

Le connecteur électrique est notamment destiné à échanger des signaux entre la carte électronique et l'extérieur du dispositif électrique de puissance. Par exemple, lorsque le dispositif électrique est un onduleur, le connecteur électrique peut notamment permettre de recevoir des données de position et/ou de température d'une machine électrique et/ou d'une boite de vitesse du véhicule.

Dans une forme de réalisation, le connecteur électrique comprend six broches de connexion, permettant par exemple de transmettre des données de position et température.

Dans une forme de réalisation, le connecteur électrique est monté sur la trappe, notamment par vissage.

Dans une autre forme de réalisation, le connecteur électrique est, au moins en partie, issu de matière de la trappe.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
- la figure 1 illustre schématiquement une forme de réalisation d'un véhicule selon l'invention ;
- la figure 2 est une vue partielle rapprochée en perspective d'une forme de réalisation d'un onduleur selon l'invention ;
- la figure 3 est une vue en coupe longitudinale de l'onduleur de la figure 2 ;
- la figure 4 est une vue rapprochée du connecteur électrique de l'onduleur illustré à la figure 3.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

Dans la description qui sera faite ci-après, l'invention sera décrite dans son application à un véhicule automobile électrique ou hybride sans que cela ne soit limitatif de la portée de la présente invention.

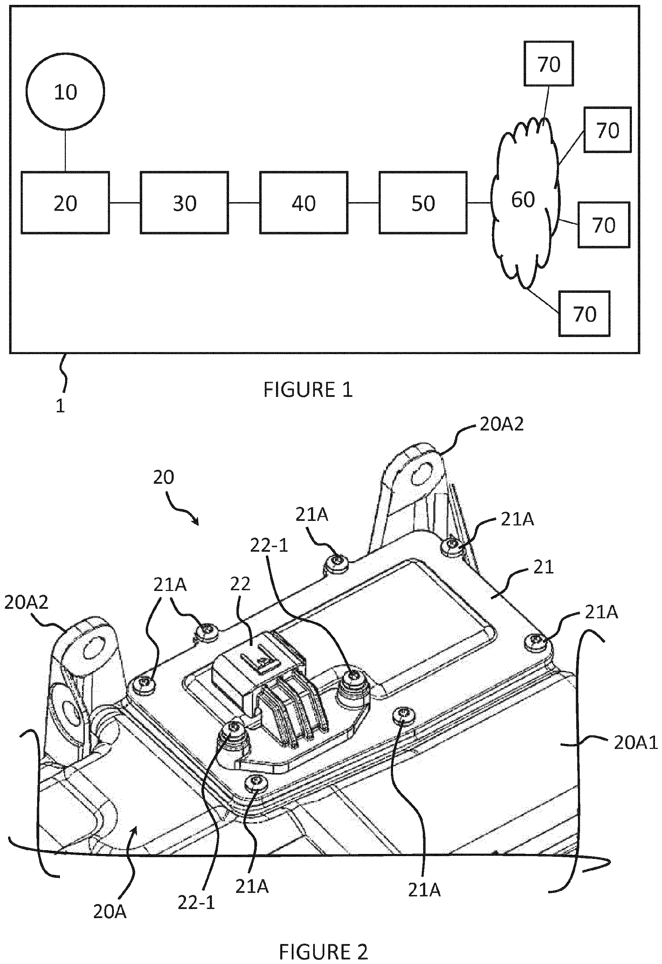

Dans l'exemple décrit ci-après, en référence à la figure 1, le véhicule 1 comprend notamment une machine électrique 10, un dispositif électrique de puissance se présentant sous la forme d'un onduleur 20, une batterie d'alimentation haute tension 30, un convertisseur 40 de tension, une batterie d'alimentation basse tension 50, un réseau électrique embarqué basse tension 60 et une pluralité d'équipements électriques auxiliaires 70. Dans cet exemple préféré, le dispositif électrique de puissance se présente sous la forme d'un onduleur 20 sans toutefois que cela ne limite la portée de la présente invention. On notera ainsi que l'ensemble électrique pourrait être autre chose qu'un onduleur 20, par exemple un chargeur ou un convertisseur de tension ou tout autre dispositif électrique de puissance embarqué dans le véhicule 1.

Le réseau électrique embarqué basse tension 60 relie la batterie d'alimentation basse tension 50 et la pluralité d'équipements électriques auxiliaires 70 afin que la batterie d'alimentation basse tension 50 alimente lesdits équipements électriques auxiliaires 70, tels que des calculateurs embarqués, des moteurs de lève-vitres, un système multimédia, etc. La batterie d'alimentation basse tension 50 délivre typiquement par exemple une tension de l'ordre de 12 V, 24 V ou 48 V. La recharge de la batterie d'alimentation basse tension 50 est réalisée à partir de la batterie d'alimentation haute tension 30 via le convertisseur 40 de tension continue en tension continue.

La batterie d'alimentation haute tension 30 est également reliée à l'onduleur 20 afin d'assurer une fonction d'alimentation en énergie de la machine électrique 10 comme cela sera décrit ci-après. La batterie d'alimentation haute tension 30 délivre typiquement une tension comprise entre 100 V et 900 V, de préférence entre 100 V et 500 V. La recharge en énergie électrique de la batterie d'alimentation haute tension 30 peut être réalisée en la connectant à un réseau électrique externe, par exemple le réseau électrique alternatif domestique (non représenté).

La machine électrique 10 est une machine électrique tournante, de préférence destinée à entrainer les roues du véhicule 1 à partir de l'énergie fournie par la batterie d'alimentation haute-tension 30. Plus précisément, la machine électrique 10 peut être une machine électrique à courant alternatif alimentée par une source de courants polyphasés. Par exemple, la machine électrique 10 peut être un moteur à courant alternatif. La machine électrique 10 peut par exemple être alimentée par une source de courants triphasés sans que cela ne soit limitatif de la portée de la présente invention.

Dans cet exemple, la commande de la machine électrique 10 est réalisée au moyen de l'onduleur 20. Ledit onduleur 20 permet de convertir le courant continu fourni par la batterie d'alimentation haute tension 30 en une pluralité de courants de commande alternatifs dits « de phase », par exemple sinusoïdaux. Autrement dit, l'onduleur 20 a pour fonction de transformer le courant continu délivré en entrée par la batterie d'alimentation haute tension 30 en une pluralité de courants de phase permettant de commander la machine électrique 10. A l'inverse, dans un autre mode de fonctionnement, la machine électrique 10 peut également fournir des courants alternatifs à l'onduleur 20 afin que ledit onduleur 20 les transforme en un courant continu permettant de charger la batterie d'alimentation haute tension 30.

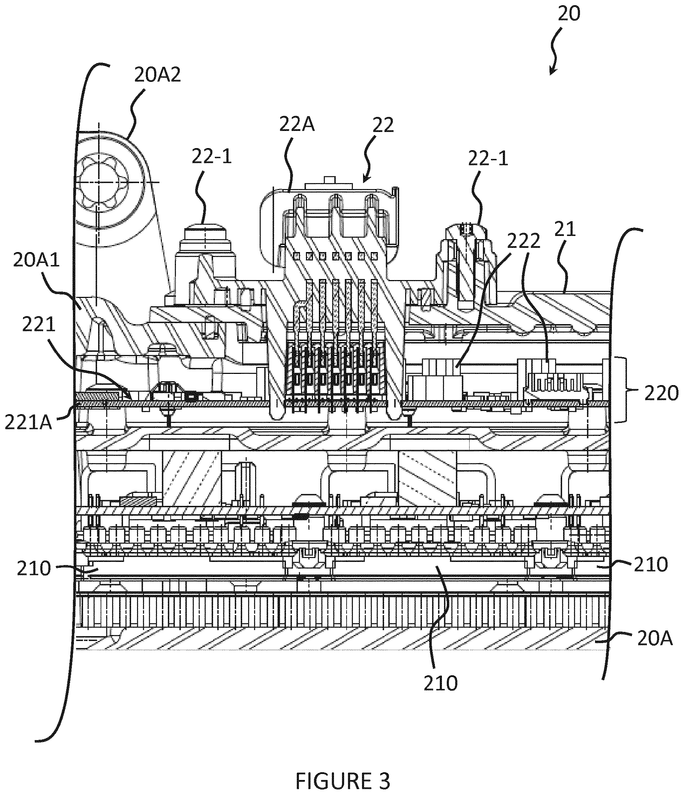

On a représenté aux figures 2 à 4, un exemple d'onduleur 20 selon l'invention. En référence à la figure 3, l'onduleur 20 comprend un module électronique de puissance 210 et une unité électronique de contrôle 220.

Le module électronique de puissance 210 comprend des composants électroniques de puissance par lesquels passe l'énergie alimentant la machine électrique 10, notamment destinés à transformer le courant continu en courants alternatifs ou vice-versa. Ces composants électroniques de puissance peuvent comprendre des interrupteurs électroniques, tels que par exemple des transistors semi-conducteurs, agencés en circuit électrique pour permettre un passage commandé d'énergie électrique entre la batterie d'alimentation haute tension 30 et la machine électrique 10. En particulier, les composants peuvent être des puces semi-conductrices nues pour lesquels un corps du module électronique de puissance 210 réalise une encapsulation.

Alternativement, les composants électroniques de puissance pourraient être des composants discrets ayant chacun une encapsulation propre.

Toujours en référence à la figure 3, l'unité électronique de contrôle 220 comprend des composants 222 pour contrôler les composants du module électronique de puissance 210. Plus précisément, l'unité électronique de contrôle 220 commande les composants électroniques de puissance, notamment le module électronique de puissance 210, afin qu'il réalise la fonction de conversion du courant continu reçu de la batterie d'alimentation haute tension 30 en une pluralité de courants de phase alternatifs de commande de la machine électrique 10 (ou la conversion d'une pluralité de courants alternatifs reçus de la machine électrique 10 en un courant continu permettant de recharger la batterie d'alimentation haute tension 30).

Comme illustré sur la figure 2, l'onduleur 20 comprend un boitier 20A dans lequel sont montés les composants électroniques de puissance, notamment le module électronique de puissance 210, et l'unité électronique de contrôle 220.

Le boitier 20A comprend une pluralité de parois dont l'une 20A1 desdites parois délimite une ouverture obturée par une trappe 21 sur laquelle est vissé un connecteur électrique 22 de type « mâle » au moyen de deux vis 22-1. Deux oeillets de fixation 20A2 s'étendent depuis la paroi 20A1 afin de fixer l'onduleur 20 dans le véhicule 1. Le connecteur électrique 22 pourrait être au moins en partie issu de matière avec la trappe 21, notamment au niveau d'un corps 22A du connecteur électrique 22 (figure 3).

Dans cet exemple, la trappe 21 est montée sur la paroi 20A1 au moyen d'un ensemble de vis 21A. Toutefois, il va de soi que la trappe 21 pourrait être montée sur la paroi 20A1 d'une manière différente, par exemple au moyen de charnières, d'écrous papillon ou de tout autre moyens adaptés avec lesquels ladite trappe 21 peut être déplacée entre une position fermée, d'obturation de l'ouverture, et une position ouverte.

De nouveau en référence à la figure 3, l'unité électronique de contrôle 220 comprend une carte électronique 221 permettant de contrôler les composants électroniques de puissance, notamment le module électronique de puissance 210. Cette carte électronique 221 comprend un support 221A (i.e. une carte), sur lequel est formé, notamment imprimé, un circuit électrique (non visible), et des composants électroniques montés sur ledit support 221A reliés entre eux via ledit circuit électrique. Le circuit électrique est connecté électriquement aux composants électroniques du module électronique de puissance 210 afin de pouvoir les contrôler.

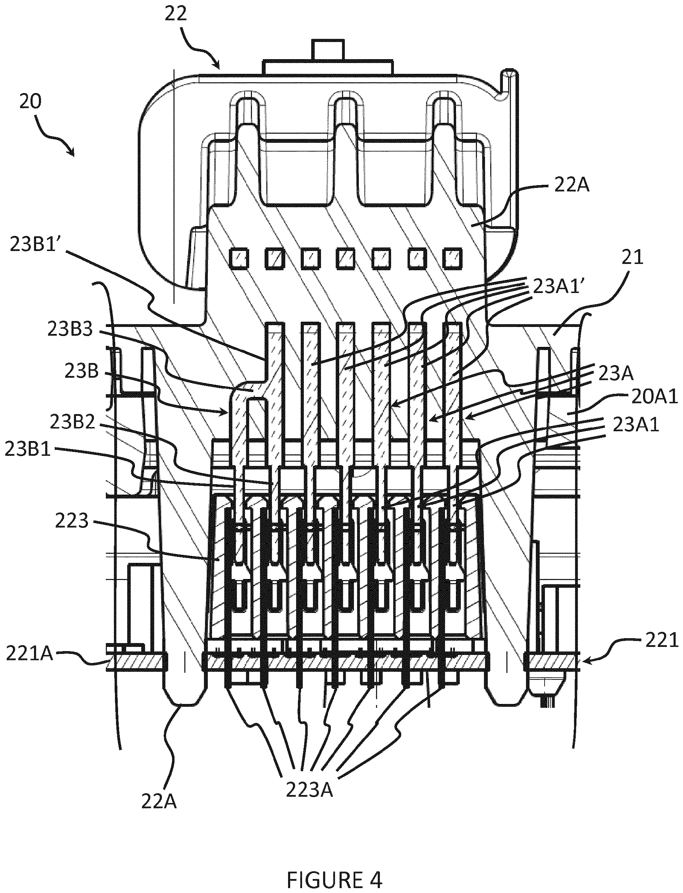

Comme illustré sur la figure 4, la carte électronique 221 comprend également un organe de connexion 223 électrique de type « femelle » sur lequel est connecté le connecteur électrique 22 et comportant une pluralité de bornes se présentant sous la forme de lamelles 223A de connexion électrique.

Le connecteur électrique 22 est destiné à être relié à un objet extérieur à l'onduleur 20, notamment à la machine électrique 10 et/ou à la boite de vitesse du véhicule (non représentée) au moyen d'un câble de connexion électrique (non représenté) afin notamment de recevoir des données de position et/ou de température de la machine électrique 10 et/ou de la boite de vitesse permettant notamment de piloter en courant ladite machine électrique 10.

Comme illustré sur les figures 2 à 4, le connecteur électrique 22 est notamment monté de manière traversante sur la trappe 21, c'est-à-dire qu'il traverse la trappe 21.

En référence à la figure 4, le connecteur électrique 22 comprend un corps 22A, réalisé par exemple en un matériau plastique, surmoulé autour d'une pluralité de broches de connexion 23A, 23B. La pluralité de broches de connexion comprend des broches de connexion monobrins 23A et une broche de connexion à double brin dite « broche de contact » 23B.

Chaque broche de connexion 23A, 23B du connecteur électrique 22 comprend au moins une extrémité libre dite « de connexion » 23A1, 23B1, 23B2 et une extrémité de liaison 23A1', 23B1', noyée dans le corps 22A du connecteur électrique 22.

Les broches de connexion monobrins 23A comporte une unique extrémité de connexion 23A1 tandis que la broche de contact 23B comporte deux extrémités de connexion 23B1, 23B2. A cette fin, la broche de contact 23B comprend dans cet exemple une portion en forme de U appelée cavalier et comprenant les deux extrémités de connexion 23B1, 23B2 reliées entre elles par une portion de liaison 23B3. Dans l'exemple non limitatif illustré aux figures 3 et 4, le connecteur électrique 22 comprend six broches de connexion 23A, 23B présentant au total sept extrémités de connexion 23A1, 23B1, 23B2.

L'organe de connexion 223 comprend autant de lamelles 223A électriquement conductrices que d'extrémités de connexion 23A1, 23B1, 23B2 des broches de connexion 23A, 23B du connecteur électrique 22. Ainsi, comme illustré à la figure 4, chaque extrémité de connexion 23A1, 23B1, 23B2 est reliée électriquement avec l'une des lamelles 223A du connecteur électrique 22. Chaque lamelle 223A est fixée sur le support 221A de la carte électronique 221, par exemple par soudage, de manière à relier électriquement les broches de connexion 23A, 23B au circuit électrique de la carte électronique 221 lorsque la trappe 21 est vissée sur la paroi 20A1 du boitier 20A de l'onduleur 20. Dans l'exemple non limitatif illustré aux figures 3 et 4, l'organe de connexion 223 comprend sept lamelles 223A connectées avec les sept extrémités de connexion 23A1, 23B1, 23B2 des broches de connexion 23A, 23B.

Les deux extrémités de connexion 23B1, 23B2 et la portion de liaison 23B3 de la broche de contact 23B constituent une portion conductrice du circuit électrique de la carte électronique 221, c'est-à-dire une branche ou shunt du circuit électrique, dont la déconnexion, par retrait de la trappe 21, provoque l'ouverture du circuit électrique et donc l'arrêt de l'onduleur 20 et/ou la décharge de capacités de l'onduleur 20 afin de prévenir un choc électrique pour un opérateur. En d'autres termes, la broche de contact 23B remplit une fonction d'interrupteur, qui est fermé lorsque la trappe 21 est montée sur la paroi 20A1 et que les broches de connexion 23A, 23B du connecteur électrique 22 mâle sont connectées aux lamelles 223A de l'organe de connexion 223 femelle et qui est ouvert lorsque la trappe 21 est ouverte et que les broches de connexion 23A, 23B du connecteur électrique 22 mâle ne sont plus connectées aux lamelles 223A de l'organe de connexion 223.

Ainsi, lorsqu'un opérateur retire la trappe 21, le connecteur électrique 22 se déconnecte de l'organe de connexion 223. En particulier, les deux extrémités de connexion 23B1, 23B2 de la broche de contact 23B se trouvent déconnectées du circuit électrique de la carte électronique 221 de l'unité électronique de contrôle 220 de sorte à interrompre la circulation des forts courants dans les composants électroniques de puissance dudit onduleur 20 et/ou à provoquer la décharge des capacités de l'onduleur 20 empêchant ainsi à l'opérateur de se blesser ultérieurement.

L'invention ne se limite pas au seul exemple décrit ci-dessus. En outre, les formes et dimensions des éléments représentés sur les figures ne sont pas limitatifs de la portée de la présente invention, qui est définie par les revendications.

## Revendications

1. Dispositif (20) électrique de puissance, ledit dispositif (20) comprenant un boitier (20A) à l'intérieur duquel est monté au moins un composant électronique de puissance et une unité électronique de contrôle (220), ladite unité électronique de contrôle (220) comprenant une carte électronique (221) permettant le contrôle dudit composant électronique de puissance (210), ledit boitier (20A) comprenant une trappe (21) et une pluralité de parois dont au moins l'une (20A1) desdites parois délimite une ouverture obturée par la trappe (21), ladite trappe (21) comprenant un connecteur électrique (22) traversant ladite trappe (21), ledit connecteur électrique (22) comprenant une pluralité de broches de connexion (23A, 23B) électrique, ledit dispositif (20) étant **caractérisé en ce que** l'une (23B) des broches de connexion (23A, 23B), dite « broche de contact » (23B), constitue une portion conductrice de la carte électronique (221) dont la déconnexion, par retrait de la trappe (21), provoque l'arrêt du dispositif (20) ou la décharge de capacités du dispositif (20).

2. Dispositif (20) selon la revendication 1, dans lequel chaque broche de connexion (23A, 23B) du connecteur électrique (22) comprend au moins une extrémité libre dite « de connexion » (23A1, 23B1, 23B2).

3. Dispositif (20) selon la revendication précédente, dans lequel la broche de contact (23B) comprend deux extrémités de connexion (23B1, 23B2).

4. Dispositif (20) selon la revendication précédente, dans lequel la broche de contact (23B) présente au moins en partie une forme de U (23B3).

5. Dispositif (20) selon l'une des revendications précédentes, dans lequel, le connecteur électrique (22) comprenant un corps (22A) réalisé en un matériau électriquement isolant, chaque broche de connexion (23A, 23B) du connecteur électrique (22) comprend une extrémité de liaison (23A1', 23B1', 23B2') noyée dans ledit corps (22A) du connecteur électrique (22).

6. Dispositif (20) selon l'une des revendications précédentes, dans lequel la carte électronique (221) comprend un organe de connexion (223) permettant de recevoir les extrémités de connexion (23A1, 23B1, 23B2) des broches de connexion (23A, 23B) du connecteur électrique (22).

7. Dispositif (20) selon l'une des revendications précédentes, dans lequel le connecteur électrique (22) est destiné à échanger des signaux entre la carte électronique (221) et l'extérieur du dispositif (20) électrique de puissance.

8. Dispositif (20) selon l'une des revendications précédentes, dans lequel le connecteur électrique (22) est monté sur la trappe (21), notamment par vissage.

9. Dispositif (20) selon l'une des revendications précédentes, dans lequel le connecteur électrique (22) comprend six broches de connexion (23A, 23B).

10. Dispositif (20) selon l'une des revendications précédentes, ledit dispositif étant un onduleur (20) apte à convertir un signal de courant continu en un ou plusieurs signaux de courant alternatifs.

## Patentansprüche

1. Elektrische Leistungsvorrichtung (20), wobei die Vorrichtung (20) ein Gehäuse (20A) enthält, in das mindestens ein elektronisches Leistungsbauteil und eine elektronische Steuereinheit (220) montiert sind, wobei die elektronische Steuereinheit (220) eine Elektronikkarte (221) enthält, die die Steuerung des elektronischen Leistungsbauteils (210) erlaubt, wobei das Gehäuse (20A) eine Klappe (21) und eine Vielzahl von Wänden enthält, von denen mindestens eine (20A1) der Wände eine von der Klappe (21) verschlossene Öffnung begrenzt, wobei die Klappe (21) einen die Klappe (21) durchquerenden elektrischen Verbinder (22) enthält, wobei der elektrische Verbinder (22) eine Vielzahl von elektrischen Anschlussstiften (23A, 23B) enthält, wobei die Vorrichtung (20) **dadurch gekennzeichnet ist, dass** einer (23B) der Anschlussstifte (23A, 23B), "Kontaktstift" (23B) genannt, einen leitenden Abschnitt der Elektronikkarte (221) bildet, dessen Trennung durch Entfernen der Klappe (21) das Anhalten der Vorrichtung (20) oder die Entladung von Kondensatoren der Vorrichtung (20) bewirkt.

2. Vorrichtung (20) nach Anspruch 1, wobei jeder Anschlussstift (23A, 23B) des elektrischen Verbinders (22) mindestens ein freies so genanntes "Anschluss"-Ende (23A1, 23B1, 23B2) enthält.

3. Vorrichtung (20) nach dem vorhergehenden Anspruch, wobei der Kontaktstift (23B) zwei Anschlussenden (23B1, 23B2) enthält.

4. Vorrichtung (20) nach dem vorhergehenden Anspruch, wobei der Kontaktstift (23B) zumindest zum Teil eine U-Form (23B3) aufweist.

5. Vorrichtung (20) nach einem der vorhergehenden Ansprüche, wobei, da der elektrische Verbinder (22) einen Körper (22A) aus einem elektrisch isolierenden Material aufweist, jeder Anschlussstift (23A, 23B) des elektrischen Verbinders (22) ein Verbindungsende (2341', 23B1', 23B2') enthält, das in den Körper (22A) des elektrischen Verbinders (22) eingebettet ist.

6. Vorrichtung (20) nach einem der vorhergehenden Ansprüche, wobei die Elektronikarte (221) ein Anschlussorgan (223) enthält, das es ermöglicht, die Anschlussenden (23A1, 23B1, 23B2) der Anschlussstifte (23A, 23B) des elektrischen Verbinders (22) aufzunehmen.

7. Vorrichtung (20) nach einem der vorhergehenden Ansprüche, wobei der elektrische Verbinder (22) dazu bestimmt ist, Signale zwischen der Elektronikkarte (221) und der Außenumgebung der elektrischen Leistungsvorrichtung (20) auszutauschen.

8. Vorrichtung (20) nach einem der vorhergehenden Ansprüche, wobei der elektrische Verbinder (22) insbesondere durch Schraubverbindung auf die Klappe (21) montiert ist.

9. Vorrichtung (20) nach einem der vorhergehenden Ansprüche, wobei der elektrische Verbinder (22) sechs Anschlussstifte (23A, 23B) enthält.

10. Vorrichtung (20) nach einem der vorhergehenden Ansprüche, wobei die Vorrichtung ein Wechselrichter (20) ist, der geeignet ist, ein Gleichstromsignal in ein oder mehrere Wechselstromsignale umzuwandeln.

## Claims

1. Power electrical device (20), said device (20) comprising a housing (20A) inside which is mounted at least one power electronic component and a control electronic unit (220), said control electronic unit (220) comprising an electronic circuit board (221) allowing said power electronic component (210) to be controlled, said housing (20A) comprising a hatch (21) and a plurality of walls of which at least one (20A1) of said walls delimits an aperture blocked by the hatch (21), said hatch (21) comprising an electrical connector (22) passing through said hatch (21), said electrical connector (22) comprising a plurality of electrical connection pins (23A, 23B), said device (20) being **characterized in that** one (23B) of the connection pins (23A, 23B), called "contact pin" (23B), constitutes a conductive portion of the electronic circuit board (221), the disconnection of which, through the removal of the hatch (21), provokes the stopping of the device (20) or the discharging of capacitors of the device (20).

2. Device (20) according to Claim 1, wherein each connection pin (23A, 23B) of the electrical connector (22) comprises at least one so-called "connection" free end (23A1, 23B1, 23B2).

3. Device (20) according to the preceding claim, wherein the contact pin (23B) comprises two connection ends (23B1, 23B2).

4. Device (20) according to the preceding claim, wherein the contact pin (23B) is at least partly U-shaped (23B3).

5. Device (20) according to one of the preceding claims, wherein, the electrical connector (22) comprising a body (22A) made of an electrically insulating material, each connection pin (23A, 23B) of the electrical connector (22) comprises a link end (23A1', 23B1', 23B2') embedded in said body (22A) of the electrical connector (22).

6. Device (20) according to one of the preceding claims, wherein the electronic circuit board (221) comprises a connection member (223) for receiving the connection ends (23A1, 23B1, 23B2) of the connection pins (23A, 23B) of the electrical connector (22).

7. Device (20) according to one of the preceding claims, wherein the electrical connector (22) is intended to exchange signals between the electronic circuit board (221) and the outside of the power electrical device (20).

8. Device (20) according to one of the preceding claims, wherein the electrical connector (22) is mounted on the hatch (21), notably by screwing.

9. Device (20) according to one of the preceding claims, wherein the electrical connector (22) comprises six connection pins (23A, 23B).

10. Device (20) according to one of the preceding claims, said device being an inverter (20) capable of converting a direct current signal into one or more alternating current signals.
